(19) Europäisches Patentamt
European Patent Office
Office européen des brevets

(11) **EP 3 752 851 B1**

(12) **EUROPÄISCHE PATENTSCHRIFT**

(45) Veröffentlichungstag und Bekanntmachung des Hinweises auf die Patenterteilung:
**09.04.2025   Patentblatt 2025/15**

(21) Anmeldenummer: **18826552.4**

(22) Anmeldetag: **14.12.2018**

(51) Internationale Patentklassifikation (IPC):
$G01S\ 13/931^{(2020.01)}$   $G01S\ 13/58^{(2006.01)}$
$G01S\ 7/35^{(2006.01)}$   $G01S\ 13/46^{(2006.01)}$
$G01S\ 7/295^{(2006.01)}$   $G01S\ 13/87^{(2006.01)}$
$G01S\ 13/44^{(2006.01)}$   $G01S\ 13/34^{(2006.01)}$

(52) Gemeinsame Patentklassifikation (CPC):
**G01S 13/589; G01S 7/295; G01S 7/354;
G01S 13/343; G01S 13/4454; G01S 13/584;
G01S 13/878; G01S 13/931;** G01S 7/356;
G01S 13/4445; G01S 2013/466; G01S 2013/93271

(86) Internationale Anmeldenummer:
**PCT/EP2018/084915**

(87) Internationale Veröffentlichungsnummer:
**WO 2019/158253 (22.08.2019 Gazette 2019/34)**

(54) **SCHÄTZUNG VON QUERGESCHWINDIGKEITEN ODER KARTESISCHEN GESCHWINDIGKEITEN VON PUNKTZIELEN MIT EINEM RADARSENSOR**

ESTIMATION OF TRANSVERSE VELOCITIES OR CARTESIAN VELOCITIES OF POINT TARGETS WITH A RADAR SENSOR

ESTIMATION DE VITESSES TRANSVERSALES OU DE VITESSES CARTÉSIENNES DE CIBLES PONCTUELLES AU MOYEN D'UN CAPTEUR RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **15.02.2018   DE 102018202293**

(43) Veröffentlichungstag der Anmeldung:
**23.12.2020   Patentblatt 2020/52**

(73) Patentinhaber: **Robert Bosch GmbH
70442 Stuttgart (DE)**

(72) Erfinder: **SCHOOR, Michael
70195 Stuttgart (DE)**

(56) Entgegenhaltungen:
EP-A1- 2 068 173        WO-A2-2010/000252
DE-A1- 102012 024 998   DE-A1- 102013 011 239
DE-A1- 102013 019 804

**Beschreibung**

Die Erfindung betrifft ein Verfahren für einen Radarsensor, insbesondere für einen Radarsensor für Kraftfahrzeuge, sowie einen Radarsensor, insbesondere für Kraftfahrzeuge.

Stand der Technik

Herkömmliche Radarsensoren detektieren Radarziele in Polarkoordinaten. Es wird beispielsweise eine radiale Entfernung gemessen, eine radiale Relativgeschwindigkeit, sowie Winkel im Azimut und/oder in der Elevation. Eine Bestimmung einer Quergeschwindigkeit (bzw. Tangentialgeschwindigkeit) oder Winkelgeschwindigkeit konnte nur über eine beobachtete Änderung des Winkels über die Zeit oder unter Verwendung komplexer Objektmodelle für ausgedehnte Radarobjekte erfolgen.

Radarsensoren werden in Kraftfahrzeugen beispielsweise zur Messung der Abstände, Relativgeschwindigkeiten und Azimutwinkel von im Vorfeld des eigenen Fahrzeugs georteten Fahrzeugen oder sonstigen Radarzielen eingesetzt. Mehrere Antennen sind dann beispielsweise in Abstand zueinander auf einer Horizontalen angeordnet, so dass unterschiedliche Azimutwinkel der georteten Radarziele zu Differenzen in den Lauflängen führen, die die Radarsignale vom Radarziel bis zur jeweiligen Antenne zurückzulegen haben. Diese Lauflängendifferenzen führen zu entsprechenden Unterschieden in der Amplitude und Phase der Signale, die von den Antennen empfangen und in den zugehörigen Auswertungskanälen ausgewertet werden. Für eine Winkelschätzung nutzt man den Umstand aus, dass die Amplituden- und Phasenbeziehungen der von den verschiedenen Empfangsantennen erhaltenen Signale in charakteristischer Weise vom Winkel des Radarziels abhängig sind. Durch Abgleich der in den verschiedenen Kanälen empfangenen (komplexen) Amplituden mit entsprechenden Amplituden in einem Antennendiagramm lässt sich dann der Einfallswinkel des Radarsignals und damit der Azimutwinkel des Radarziels bestimmen. Auf entsprechende Weise lässt sich mit vertikal übereinander angeordneten Antennen auch der Elevationswinkel eines Radarziels schätzen.

DE 10 2012 024998 A1 beschreibt ein Verfahren, bei welchem mittels zumindest eines Radarsensors in aufeinanderfolgenden Messzyklen jeweils ein Sendesignal ausgesendet wird und ein von dem Zielobjekt reflektiertes Signal empfangen wird, wobei zu dem Zielobjekt zumindest zwei Zielechos detektiert werden und zu den zumindest zwei Zielechos jeweils ein Wert der radialen Geschwindigkeit und ein Wert des Zielwinkels bestimmt werden, und wobei die laterale Geschwindigkeit des Zielobjekts in Abhängigkeit von den Werten der radialen Geschwindigkeit und den Werten des Zielwinkels bestimmt wird.

EP 2 068 173 A1 beschreibt ein Verfahren zur Bestimmung einer für eine Querbewegung eines georteten Objekts repräsentativen dynamischen Größe in einem Fahrerassistenzsystem für Kraftfahrzeug, das zwei seitlich versetzt zueinander angeordnete winkelauflösende Abstandssensoren aufweist, wobei die dynamische Größe anhand der von den beiden Abstandssensoren gemessenen Radialkomponenten der Relativgeschwindigkeit und von den Abstandssensoren gemessenen Azimutwinkeln berechnet wird.

DE 10 2013 019804 A1 beschreibt ein Verfahren zur Ermittlung einer Bewegung eines Objekts. Das Objekt wird mit zumindest zwei Radarsensoren gleichzeitig in einem Winkelbereich erfasst, wobei anhand von zumindest drei an verschiedenen Positionen am Objekt angeordneten Objektpunkten unter Annahme eines starren Objekts Bewegungsinformationen des Objekts bestimmt werden.

DE 10 2013 011239 A1 beschreibt ein Verfahren zur Bestimmung einer Bewegung eines Objekts. Anhand von mittels eines Radarsensors erfassten Daten wird ein Geschwindigkeitsprofil aller dem Objekt zugeordneten Messpunkte aus radialen Geschwindigkeiten der Messpunkte gebildet, wobei anhand des Geschwindigkeitsprofils eine absolute Geschwindigkeit und/oder eine Bewegungsrichtung des Objekts ermittelt wird.

WO 2010/000252 A2 beschreibt ein Radarsystem zur Erfassung der Umgebung eines Kraftfahrzeugs, mit mindestens zwei Sendeantennen. In einem Beispiel erfolgt eine Kompensation einer von einer Relativgeschwindigkeit generierten linearen Phasenänderung über acht Antennenkombinationen.

Offenbarung der Erfindung

Im Zuge einer weiteren Steigerung der Leistungsfähigkeit der Radarsensoren werden d,v-Schätzungen mit gesteigerter Auflösung erfolgen können.

Auch wird eine Zunahme der nutzbaren Sensorgröße, d.h. der Größe oder Apertur der Antennenanordnung, eine Steigerung der Genauigkeit der Winkelschätzung und eine verbesserte Winkeltrennung ermöglichen. Bei einem FMCW-(frequency modulated continuous wave)-Messverfahren mit linearen Frequenzrampen und einer Auswertung der Empfangssignale mittels diskreter Fourier-Transformation, insbesondere einer FFT (Fast Fourier Transformation), entspricht die Breite eines Entfernungsbins der Fourier-Transformation einem Entfernungsunterschied $\Delta r$ mit $\Delta r = c/(2F)$, wobei c die Lichtgeschwindigkeit ist und F der Frequenzhub einer linearen Frequenzrampe des FMCW-Sendesignals ist. Dieser Entfernungsunterschied wird hier auch als Entfernungsauflösung bezeichnet.

**EP 3 752 851 B1**

Unter der Entfernungsauflösung ist somit die kleinste Entfernungsdifferenz zu verstehen, bei der (bei gleicher Relativgeschwindigkeit) zwei Messwerte der Entfernung vom Radarsensor in der gegebenen Betriebsweise des Radarsensors noch auf getrennte Bins abgebildet werden können. Bei Durchführung einer FFT entspricht die Entfernungsauflösung dem Abstand zweier Entfernungsbins bei der FFT, i.e. der Breite eines Entfernungsbins. Hier und im folgenden werden die Begriffe Entfernungsauflösung und Breite des Entfernungsbins gleichbedeutend verwendet. Im Unterschied dazu wird unter der Entfernungstrennfähigkeit das doppelte der Breite des Entfernungsbins verstanden. Wird die Bandbreite eines Radarsensors gesteigert, ist beispielweise bei einem Frequenzhub des Sendesignals von F = 2 GHz eine Entfernungsauflösung von Δr = 7,5 cm möglich. Wird zugleich die Apertur oder, im Falle eines MIMO-(Multiple Input Multiple Output)-Radarsensors, die virtuelle Apertur gesteigert auf Werte ähnlicher Größenordnung, so können je nach Winkel eines Radarzieles die Lauflängenunterschiede zwischen Empfangssignalen einzelner Antennen oder Auswertungskanälen bereits so groß sein, dass in den FourierSpektren der Auswertungskanäle Information über die Amplitude und/oder Phase der empfangenen Signale je nach Auswertungskanal nicht nur in einem durch die d,v-Schätzung eines erfassten Radarzieles bestimmten Frequenzbin enthalten ist, sondern auch in einem oder mehreren benachbarten Frequenzbins. Bei einer Entfernung eines direkt voraus befindlichen Radarziels von 5 m und einem Versatz zwischen einer mittleren und einer äußeren Antennenpositionen von z.B. 40 mm ergibt sich ein Winkelunterschied von ca. 0,5°. Hat das Radarziel eine Quergeschwindigkeit von z.B. 2,7 m/s (10 km/h), wird an der mittleren Antennenposition keine Relativgeschwindigkeit gesehen, an der äußeren Antennenposition jedoch eine radiale Relativgeschwindigkeit von 0,025 m/s bzw. auf der anderen Seite -0,025 m/s. Bei einer Bingröße der FFT von 0.1 m/s (Geschwindigkeitsauflösung der Messung) entspricht dies einer Frequenzlagenverschiebung von -1/4 Bin, 0 Bin, oder +1/4 Bin in den entsprechenden drei Auswertungskanälen.

Aufgabe der Erfindung ist es, ein Verfahren und einen Radarsensor zu schaffen, mit denen eine schnelle Schätzung einer Tangentialgeschwindigkeit eines Radarziels ermöglicht wird.

Diese Aufgabe wird erfindungsgemäß gelöst durch das Verfahren nach Anspruch 1. Unter einer kartesischen Geschwindigkeit wird eine Geschwindigkeit angegeben in einem orthogonalen Koordinatensystem verstanden. Dabei umfasst die kartesische Geschwindigkeit eine Geschwindigkeit ir Vorwärtsrichtung bezogen auf den Radarsensor, und die Tangentialgeschwindigkeit. Bei einem unmittelbar in Vorwärtsrichtung ausgerichtetem Radarsensor entspricht die Tangentialgeschwindigkeit der Quergeschwindigkeit.

Dies ermöglicht es, auf der Basis einer einzelnen Messung mit einem einzelnen Sendesignal-Modulationszyklus, insbesondere etwa für ein Sendesignal mit einem Frequenz-Modulationsmuster in Form einer Frequenzrampe oder in Form einer Rapid-Chirp-Sequenz, die Tangentialgeschwindigkeit eines Radarziels zu schätzen. Insbesondere kann die Tangentialgeschwindigkeit aus jeweiligen Frequenzspektren basierend auf einer einzelnen Messung der Radialgeschwindigkeit in den jeweiligen Auswertungskanälen geschätzt werden.

Die Messung der Tangentialgeschwindigkeit oder kartesischen Geschwindigkeit kann daher sehr schnell erfolgen. Insbesondere kann die Messung direkt für ein einzelnes Radarziel erfolgen, und anhand einer Erfassung des Radarziels innerhalb eines einzelnen Modulationszyklus oder einer Frequenzrampe des Sendesignals. Dadurch kann es ermöglicht werden, eine Tangentialgeschwindigkeit oder kartesische Geschwindigkeit zu messen auch bei Zielen, die nur in einem Zyklus oder in wenigen Zyklen sichtbar sind und die daher schwierig durch ein komplexes Objektmodell zu behandeln sind, wie etwa schnell querbewegte Objekte oder eine Randbebauung einer Straße.

Dies ermöglicht eine deutlich schnellere Reaktion eines Fahrerassistenzsystems oder eines Systems zum automatisierten Fahren, insbesondere bei einem Radarziel in relativ geringer Entfernung. Dies ist besonders vorteilhaft für den Schutz verwundbarer Verkehrsteilnehmer (VRU, vulnerable road users), etwa von Fußgängern.

Unter einem Radarziel wird ein Reflexionszentrum verstanden, dem nur eine einzelne Position zugeordnet wird. Der Begriff "Radarziel" wird gleichbedeutend mit "Punktziel" verwendet.

Bei dem Verfahren wird ein Sendesignal des Radarsensors von wenigstens einer Antenne gesendet, und ein Signal wird von wenigstens einer Antenne empfangen. In einer zweckmäßigen Ausführungsform ist ein gesendetes Signal rampenförmig frequenzmoduliert. In einer zweckmäßigen Ausführungsform ist der Radarsensor ein FMCW-Radarsensor.

Hier und im folgenden werden die sich auf den Radarsensor insgesamt beziehenden Größen, die geschätzt oder bestimmt werden, auch als "globale" Größen bezeichnet, während sich auf die jeweiligen Auswertungskanäle und die betreffenden mittleren Antennenpositionen von sendenden und empfangenden Antennen beziehende Größen als "individuelle" Größen bezeichnet werden. So kann beispielsweise die zu schätzende Tangentialgeschwindigkeit als globale Tangentialgeschwindigkeit bezeichnet werden.

Weiter wird die Aufgabe gelöst durch einen Radarsensor, insbesondere für Kraftfahrzeuge, mit einer Antennenanordnung mit mehreren Antennen, die in einer Richtung in verschiedenen Positionen angeordnet sind, und mit einer Steuer- und Auswerteeinrichtung, die dazu ausgelegt ist, das Verfahren auszuführen.

Vorteilhafte Ausgestaltungen und Weiterbildungen der Erfindung sind in den Unteransprüchen angegeben.

In einer zweckmäßigen Ausführungsform wird in dem Schritt des Schätzens einer Tangentialgeschwindigkeit bzw. einer kartesischen Geschwindigkeit des Radarziels die Tangentialgeschwindigkeit bzw. kartesische Geschwindigkeit des Radarziels geschätzt basierend auf der Beziehung:

$$\begin{pmatrix} v_{r,1} \\ \vdots \\ v_{r,i} \\ \vdots \\ v_{r,l} \end{pmatrix} = \begin{pmatrix} \cos\theta_1 & \sin\theta_1 \\ \vdots & \vdots \\ \cos\theta_i & \sin\theta_i \\ \vdots & \vdots \\ \cos\theta_l & \sin\theta_l \end{pmatrix} \begin{pmatrix} v_x \\ v_y \end{pmatrix}, \tag{1}$$

wobei $i = 1,...,l$ jeweilige Auswertungskanäle bezeichnet, wobei $v_{r,i}$ die bestimmten individuellen Radialgeschwindigkeiten des Radarziels sind, $\theta_i$ individuelle, den jeweiligen Auswertungskanälen zugeordnete Aspektwinkel des Radarziels sind, und $(v_x, v_y)$ die kartesische Geschwindigkeit des Radarziels ist, **wobei** $v_y$ die Tangentialgeschwindigkeit ist und $v_x$ die Geschwindigkeit eines Radarziels in Vorwärtsrichtung bezogen auf den Radarsensor ist.

In einer zweckmäßigen Ausführungsform wird in dem Schritt des Bestimmens der jeweiligen individuellen Radialgeschwindigkeiten des Radarziels für den jeweiligen Auswertungskanal die jeweilige individuelle Radialgeschwindigkeit bestimmt basierend auf einer jeweiligen Frequenzlage des Signals in dem Auswertungskanal.

In einer zweckmäßigen Ausführungsform wird in den jeweiligen Auswertungskanälen mittels Fourier-Transformation ein diskretes Frequenzspektrum berechnet, und die jeweilige Frequenzlage des Signals in dem betreffenden Auswertungskanal wird bestimmt mit einer Auflösung, die feiner ist als die Frequenzabstände der Stützstellen des diskreten Frequenzspektrums. Unter der Auflösung der Frequenzlage wird hier eine Größe verstanden, die angibt, wie fein abgestuft die möglichen Werte der Frequenzlage sind, die bei der Bestimmung erhalten werden können. Die Stützstellen des diskreten Frequenzspektrums können auch als Frequenzpunkte oder Frequenzbins bezeichnet werden.

Die jeweilige Frequenzlage kann beispielsweise bestimmt werden durch Interpolation des Frequenzspektrums, und Suche eines Peak-Maximums des Signals, oder durch Anpassung (Fitting) eines Frequenzparameters einer Modellfunktion an das Signal im Frequenzspektrum.

Im folgenden werden Ausführungsbeispiele anhand der Zeichnung näher erläutert. Es zeigen:

Fig. 1    ein Blockdiagramm eines erfindungsgemäßen Radarsensors für Kraftfahrzeuge;

Fig. 2    eine schematische Darstellung von Frequenzbins von FourierSpektren jeweiliger Auswertungskanäle;

Fig. 3    eine Beziehung zwischen einer Antennenposition und einem Radarziel; und

Fig. 4    ein Blockdiagramm zur Erläuterung eines erfindungsgemäßen Verfahrens.

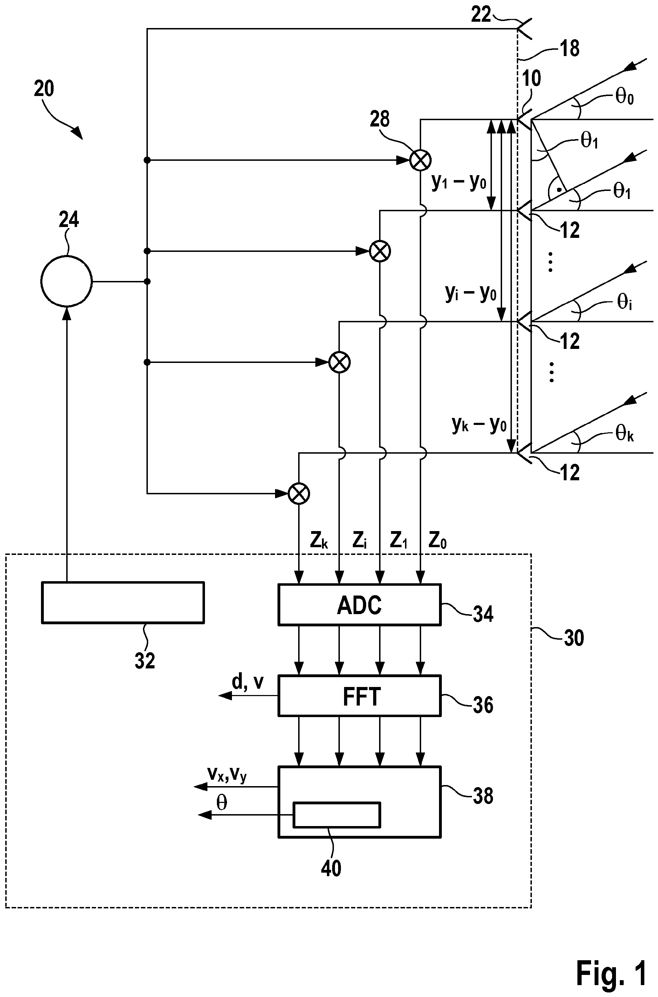

Der in Fig. 1 gezeigte Radarsensor weist mehrere empfangende Antennen oder Antennenelemente 10, 12 auf einem gemeinsamen Substrat 18 auf. Der Radarsensor wird so in ein Kraftfahrzeug eingebaut, dass mehrere der Antennen 10, 12 auf gleicher Höhe nebeneinander an horizontalen Positionen yi liegen, i=0,...,k. In Fig. 1 sind symbolisch Radarstrahlen dargestellt, die von den Antennen unter einem jeweiligen Azimutwinkel θi (Aspektwinkel) empfangen werden.

Ein Hochfrequenzteil 20 zur Ansteuerung einer sendenden Antenne 22 umfasst einen lokalen Oszillator 24, der das zu sendende Radarsignal erzeugt. Die von den Antennen 10, 12 empfangenen Radarechos werden jeweils einem Mischer 28 zugeführt, wo sie mit dem vom Oszillator 24 gelieferten Sendesignal gemischt werden. Auf diese Weise erhält man für jedes der Antennen 10, 12 ein Basisbandsignal oder Zwischenfrequenzsignal Z0, Z1, ..., Zi, ..., Zk, das einer elektronischen Steuer- und Auswerteeinheit 30 zugeführt wird.

Die Steuer- und Auswerteeinheit 30 enthält einen Steuerungsteil 32, der die Funktion des Oszillators 24 steuert. Im gezeigten Beispiel handelt es sich bei dem Radarsensor um ein FMCW-Radar, d.h., die Frequenz des vom Oszillator 24 gelieferten Sendesignals wird periodisch in Form einer Folge von steigenden und/oder fallenden Frequenzrampen moduliert.

Weiterhin enthält die Steuer- und Auswerteeinrichtung 30 einen Auswerteteil mit einem Analog/Digital-Wandler 34 mit k Kanälen, der die von den k Antennen 10, 12 erhaltenen Zwischenfrequenzsignale Z0 - Zk digitalisiert und jeweils über die Dauer einer einzelnen Frequenzrampe aufzeichnet. Die so erhaltenen Zeitsignale werden dann kanalweise in einer Transformationsstufe 36 durch Schnelle Fouriertransformation (FFT) in entsprechende Frequenzspektren umgewandelt. In diesen Frequenzspektren zeichnet sich jedes Radarziel in der Form eines Peaks ab, dessen Frequenzlage von der Signallaufzeit vom Radarsensor zum Radarziel und zurück zum Radarsensor sowie - aufgrund des Doppler-Effektes - von der Relativgeschwindigkeit des Radarziels abhängig ist. Aus den Frequenzlagen zweier Peaks, die für dasselbe Radarziel erhalten wurden, jedoch auf Frequenzrampen mit unterschiedlicher Steigung, beispielsweise einer steigenden Rampe und einer fallenden Rampe, lässt sich dann in bekannter Weise der Abstand d und die Relativgeschwindigkeit v des betreffenden Radarzieles berechnen. Die geschätzte Entfernung d kann als globale Entfernung des Radarziels bezeichnet werden, im Unterschied zu individuellen Entfernungen di, die den jeweiligen Auswertungskanälen zugeordnet sind.

Wie in Fig. 1 anhand der Radarstrahlen schematisch dargestellt wird, führen die unterschiedlichen Positionen der Antennen 10, 12 dazu, dass die Radarstrahlen, die von ein und derselben Antenne emittiert wurden, am Radarziel reflektiert wurden und dann von den verschiedenen Antennen empfangen werden, unterschiedliche Lauflängen zurücklegen und deshalb Phasenunterschiede aufweisen, die vom Azimutwinkel θ des Radarziels abhängig sind. Auch die zugehörigen Zwischenfrequenzsignale Z0 - Zk weisen entsprechende Phasenunterschiede auf. Auch die Amplituden (Beträge) der empfangenen Signale sind von Antenne zu Antenne unterschiedlich, ebenfalls abhängig vom Azimutwinkel θ.

Ein Geschwindigkeitsschätzer 38 schätzt anhand der Signale in den Frequenzspektren der Auswertungskanäle eine kartesische Geschwindigkeit des Radarziels mit den Komponenten vx, der Geschwindigkeit in Vorwärtsrichtung, bezogen auf den Radarsensor, und vy, der Tangentialgeschwindigkeit. Dies wird nachfolgend näher erläutert. Weiter schätzt ein Winkelschätzer 40 anhand der Signale einen Azimutwinkel des Radarziels.

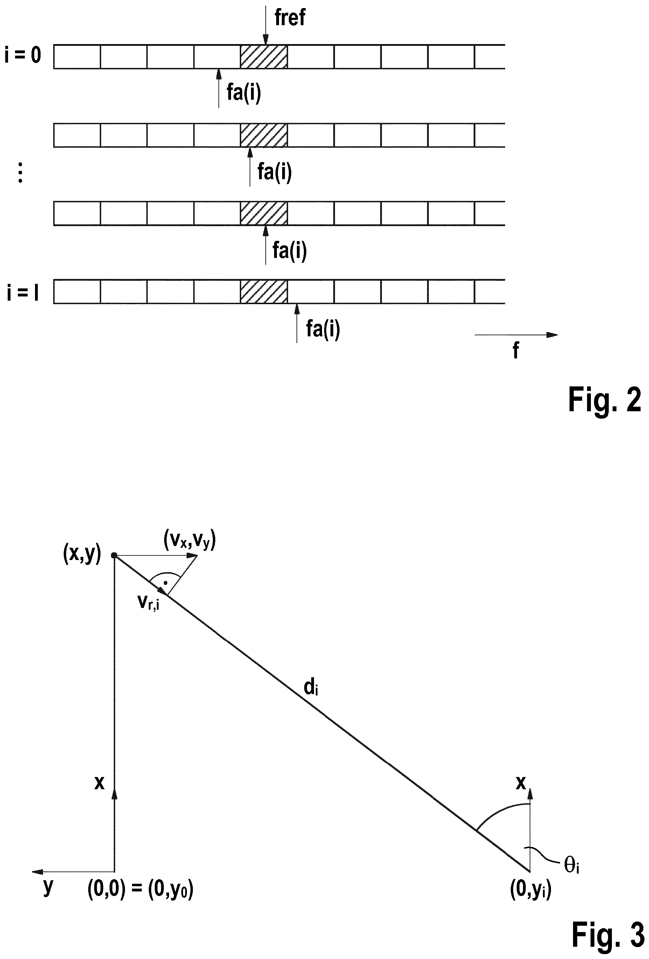

Bei einer hohen Bandbreite, entsprechend einem großen Frequenzhub der FMCW-Modulation, und einer großen Ausdehnung der Antennenanordnung sind je nach Azimutwinkel θ des Radarziels und je nach seinem Abstand d die komplexen Amplituden in den einzelnen Empfangskanälen an unterschiedlichen Frequenzlagen fa(i) im Frequenzspektrum des empfangenen Signals enthalten. Fig. 2 illustriert schematisch die Frequenzlagen fa(i) der für ein Radarziel in den Auswertungskanälen i erhaltenen Signale (Peaks des Spektrums), wobei in der Richtung zunehmender Frequenz f aufeinanderfolgende Frequenzbins des Fourier-Spektrums dargestellt sind.

Fig. 3 illustriert in der Draufsicht für eine Antennenposition eines Auswertungskanals, bezeichnet mit den Index i an den Koordinaten (0,yi), die Beziehung zu einem Punktziel als Radarziel an den Koordinaten (x,y) mit der kartesischen Geschwindigkeit (vx,vy). Der Abstand des Punktziels ist mit di bezeichnet, und der Aspektwinkel des empfangenen Radarsignals mit θi. Zur Vereinfachung der Darstellung wird angenommen, dass der Ursprung (0,0) den Mittelpunkt des Antennenarrays darstellt und einer mittleren Antennenposition entspricht. Im Beispiel ist vx=0, entsprechend einer Situation, in der das Punktziel sich vor dem Radarsensor genau in Querrichtung bewegt. Die Figur zeigt zur Vereinfachung eine Situation, in der die relative und absolute Radialgeschwindigkeit gegenüber dem Ursprung gleich Null sind. An einer im Ursprung befindlichen Antennenposition (0,y0) wird eine Radialgeschwindigkeit vr,0 = 0 gemessen. An einer Antennenposition (0,yi) wird eine Radialgeschwindigkeit vr,i gemessen.

Diese entspricht der Projektion der kartesischen Geschwindigkeit (vx,vy) auf die Radialrichtung der Antennenposition und hängt somit vom Aspektwinkel θi des Radarziels an der Antennenposition ab.

Der Zusammenhang zwischen den Aspektwinkeln θi der Auswertungskanäle i, der kartesischen Geschwindigkeit (vx,vy) des Punktziels und den individuellen Radialgeschwindigkeiten, die in den jeweiligen Auswertungskanälen i aus dem Spektrum geschätzt werden, ist gegeben durch Gleichung (1). Mit entsprechender Definition der Matrix M lässt sich diese umschreiben als:

$$\underline{v}_r = M \underline{v}_{xy}$$

Aus den individuellen Radialgeschwindigkeiten $v_{r,i}$ in den jeweiligen Auswertungskanälen kann dann der Vektor der kartesischen Geschwindigkeiten $\underline{v}_{xy}$ geschätzt werden gemäß der Methode der kleinsten Quadrate (KQ-Schätzung) zu:

$$\hat{\underline{v}}_{xy} = \left(M^T M\right)^{-1} M^T \underline{v}_r \tag{2}$$

Je größer die Winkelunterschiede sind, und je genauer die Relativgeschwindigkeiten bestimmt werden können, desto besser wird die entsprechende Schätzung. Die kleinste-Quadrate-Schätzung kann numerisch beispielsweise mittels einer Pseudo-Inversen, Singulärwertzerlegung (SVD, Singular Value Decomposition), oder einer QR-Zerlegung berechnet werden.

Die aufgrund der Lauflängenunterschiede von dem Radarsensor "gesehene" Entfernung di der Auswertungskanäle hängt von der Antennenkonfiguration ab. So werden in einem bistatischen System bzw. einem MIMO-System die Effekte (Entfernung bzw. Laufzeit) für den Weg von der Sendeantenne zum Ziel und vom Ziel zur Empfangsantenne addiert und gemittelt. Die Entfernung di ist somit die mittlere Entfernung von Hin- und Rückweg über die mittlere Laufzeit des Signals. Entsprechend wird eine mittlere Antennenposition von Sendeantenne und Empfangsantenne betrachtet.

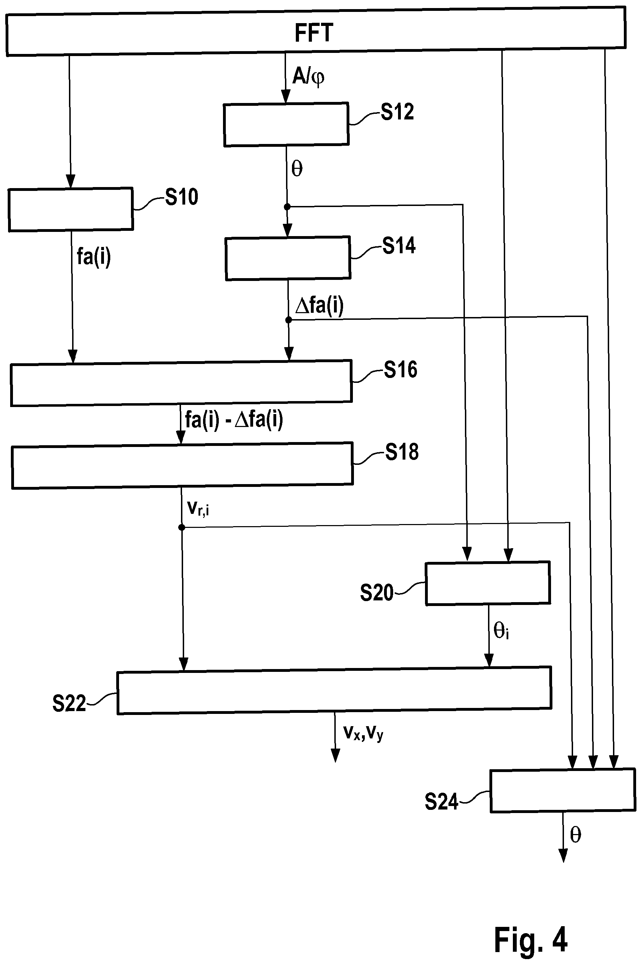

Die Steuer- und Auswerteeinrichtung 30 ist ausgebildet zur Durchführung eines Verfahrens zur Schätzung der kartesischen Geschwindigkeit des Radarziels, welches beispielhaft anhand von Fig. 4 erläutert wird und in dem Geschwindigkeitsschätzer 38 implementiert ist.

Durch Interpolation der Frequenzspektren werden im Schritt S10 die Frequenzlagen fa(i) der Signale (Peakpositionen) der Kanäle i mit hoher Auflösung bestimmt.

In einer ersten Winkelschätzung in Schritt S12 werden für jedes geortete Objekt, d.h. jedes Radarziel (jeden Peak im Frequenzspektrum) die in den I Empfangskanälen erhaltenen komplexen Amplituden mit dem Antennendiagramm verglichen, um so den Azimutwinkel θ des Radarziels zu schätzen. Dabei wird ein Vektor der komplexen Amplituden ausgewertet an einer jeweils gleichen Frequenzlage fref in den jeweiligen Spektren der Kanäle. Der geschätzte Aspektwinkel θ kann als "globaler" Aspektwinkel bezeichnet werden, im Unterschied zu den individuellen Aspektwinkeln der jeweiligen Auswertungskanäle.

Aus dem Azimutwinkel θ und den Antennenpositionen yi werden in Schritt S14 entfernungsbedingte Binverschiebungen (Verschiebungen Δfa(i) der Frequenzlage) der Kanäle bestimmt. Die Frequenzlagenverschiebungen können als entfernungsbedingte Frequenzlagenverschiebungen bezeichnet werden. Die Frequenzlagenverschiebungen können auch als Frequenzlagenkorrekturen bezeichnet werden. Sie sind, wie oben erläutert, durch eine hohe Entfernungsauflösung der Messung bedingt. Die Frequenzlagenverschiebung tritt in Abhängigkeit von dem Aspektwinkel auf. Sie kann je nach Aspektwinkel auch Null sein.

Von den Frequenzlagen fa(i) werden in Schritt S16 die Verschiebungen Δfa(i) abgezogen, und die verbleibenden Frequenzlagen fa(i)- Δfa(i) werden in Schritt **S18 ausgewertet,** um aus ihnen die individuellen Radialgeschwindigkeiten

$$k = \frac{2}{c}\left(dF + f_0 v_r T\right)$$

vr,i der Kanäle i zu bestimmen. Dies erfolgt gemäß der FMCW-Gleichung . Dabei ist k eine der verbleibenden Frequenzlage entsprechende Binposition, c die Lichtgeschwindigkeit, d die Entfernung, F der Frequenzhub der Rampe, f0 die Mittenfrequenz, vr die Radialgeschwindigkeit und T die Dauer der Rampe. Die ausgewertete Frequenzlage ist die unter Berücksichtigung der Frequenzlagenverschiebung verbleibende Frequenzlage.

In Schritt S20 werden aus der globalen Entfernung d und dem geschätzten Azimutwinkel θ individuelle Aspektwinkel θi bestimmt, beispielsweise unter Berücksichtigung der Antennenpositionen yi, etwa aufgrund geometrischer Zusammenhänge dieser Größen. Die individuellen Aspektwinkel können beispielsweise auch aus kartesischen Koordinaten des Radarziels und den mittleren Antennenpositionen errechnet werden.

In Schritt S22 erfolgt die Schätzung der kartesischen Geschwindigkeit des Radarziels anhand der Gleichungen (1) und (2). Für eine Ausgabe des Radarsensors können diese beispielsweise auf eine Radial- und Tangentialgeschwindigkeit (oder Winkelgeschwindigkeit) bezogen auf den Ursprung transformiert werden.

In einem optionalen Schritt S24 wird von dem Winkelschätzer 40 in einer zweiten, verbesserten Winkelschätzung der Azimutwinkel θ geschätzt, wobei ein Vektor der komplexen Amplituden ausgewertet wird an jeweiligen Frequenzlagen in den jeweiligen Spektren der Kanäle unter Berücksichtigung der Frequenzverschiebungen Δfa(i) und/oder entsprechender, sich aus dem Azimutwinkel θ und den Antennenpositionen yi ergebenden geschwindigkeitsbedingten Frequenzverschiebungen Δfb(i). Insbesondere handelt es sich um einen Schritt des zweiten Schätzens des Aspektwinkels des Radarziels, der zusätzlich zu dem oben beschriebenen (ersten) Schritt S12 des Schätzens des Aspektwinkels ausgeführt wird.

Das Verfahren kann insbesondere ein iteratives Verfahren sein, bei dem basierend auf der zweiten Schätzung des Aspektwinkels die von der Schätzung des Aspektwinkels abhängigen Schritte S14, S16, S18, S20, S22 erneut ausgeführt werden.

Wie aus dem Diagramm ersichtlich, können Schritte parallel zueinander oder in anderer Reihenfolge ausgeführt werden.

In einer zweckmäßigen Ausführungsform werden Unterschiede der individuellen Radialgeschwindigkeiten berücksichtigt, wenn die Entfernung des Radarziels unterhalb eines Entfernungsschwellwerts liegt. Denn bei sehr großen Entfernungen sind die Effekte zu gering, um individuelle Radialgeschwindigkeiten unterscheiden zu können. Der Entfernungsschwellwert kann anhand von Testmessungen oder basierend auf einer theoretischen Geschwindigkeitsauflösung des Radarsensors gewählt werden.

Bei den hier beschriebenen Ausführungsbeispielen wird mit einem bistatischen Antennenkonzept gearbeitet.

Das beschriebene Verfahren kann vorteilhaft insbesondere bei FMCW-Radarsensoren eingesetzt werden, die mit sogenannten Rapid-Chirp-Sequenzen arbeiten. Dabei wird in rascher Folge eine Vielzahl von Frequenzrampen (Chirps) durchfahren, die eine große Steigung und nur eine relativ geringe Dauer haben. Bei der über die einzelnen Rampen sowie über die Folge der Rampen ausgeführten 2D-FFT ergibt sich ein zweidimensionales Frequenzspektrum je Auswertungskanal i. Dementsprechend sind die Frequenzlagen fa(i) sowie die Frequenzverschiebungen Δfa(i) bzw. Δfb(i) dann im allgemeinen Fall zweidimensionale Vektoren.

**Patentansprüche**

**1.** Verfahren zum Schätzen einer Geschwindigkeit (($v_x$,$v_y$)) eines Radarziels mit einem Radarsensor für Kraftfahrzeuge, anhand von Signalen, die in jeweiligen Auswertungskanälen (i) in einer einzelnen Messung mit einem einzelnen Sendesignal-Modulationszyklus erhalten werden, wobei die jeweiligen Auswertungskanäle (i) unterschiedlichen mittleren Antennenpositionen ($y_i$) betreffender bi-statisch sendender und empfangender Antennen (22, 10, 12) des Radarsensors entsprechen, wobei die mittleren Antennenpositionen ($y_i$) der jeweiligen Auswertungskanäle (i) in horizontaler Richtung unterschiedlich sind, mit den Schritten:

- Bestimmen, für die unterschiedlichen Auswertungskanäle (i), einer dem jeweiligen Auswertungskanal zugeordneten, jeweiligen individuellen Radialgeschwindigkeit ($v_{r,i}$) des Radarziels; und
- Schätzen einer Geschwindigkeit (($v_x,v_y$)) des Radarziels, basierend auf den in einer einzelnen Messung der Radialgeschwindigkeit in den jeweiligen Auswertungskanälen (i) bestimmten individuellen Radialgeschwindigkeiten ($v_{r,i}$) des Radarziels, wobei die Geschwindigkeit (($v_x,v_y$)) Information über eine Tangentialgeschwindigkeit ($v_y$) umfasst;
- Bestimmen, für die jeweiligen Auswertungskanäle (i), eines dem jeweiligen Auswertungskanal zugeordneten, jeweiligen individuellen Aspektwinkels ($\theta_i$) des Radarziels; wobei in dem Schritt des Schätzens einer Ge-schwindigkeit (($v_x,v_y$)) des Radarziels die Geschwindigkeit (($v_x,v_y$)) des Radarziels geschätzt wird, basierend auf den bestimmten individuellen Radialgeschwindigkeiten ($v_{r,i}$) des Radarziels und auf den bestimmten individuellen Aspektwinkeln ($\theta_i$) des Radarziels.

2. Verfahren nach Anspruch 1, bei dem in dem Schritt des Schätzens einer Geschwindigkeit (($v_x,v_y$)) des Radarziels die Geschwindigkeit (($v_x,v_y$)) Information über eine Geschwindigkeit ($v_x$) in Vorwärtsrichtung bezogen auf den Radarsensor und eine Tangentialgeschwindigkeit ($v_y$) umfasst.

3. Verfahren nach Anspruch 2, bei dem in dem Schritt des Schätzens einer Geschwindigkeit (($v_x,v_y$)) des Radarziels eine kartesische Geschwindigkeit (($v_x,v_y$)) des Radarziels geschätzt wird, welche die Geschwindigkeit ($v_x$) in Vorwärts-richtung bezogen auf den Radarsensor und die Tangentialgeschwindigkeit ($v_y$) umfasst.

4. Verfahren nach einem der vorstehenden Ansprüche, bei dem in dem Schritt des Bestimmens der jeweiligen individuellen Radialgeschwindigkeiten ($v_{r,i}$) des Radarziels für den jeweiligen Auswertungskanal (i) die jeweilige individuelle Radialgeschwindigkeit ($v_{r,i}$) bestimmt wird basierend auf einer jeweiligen Frequenzlage (fa(i)) des Signals in dem Auswertungskanal (i).

5. Verfahren nach einem der vorstehenden Ansprüche, bei dem in dem Schritt des Bestimmens der jeweiligen individuellen Radialgeschwindigkeiten ($v_{r,i}$) des Radarziels für den jeweiligen Auswertungskanal (i) die jeweilige individuelle Radialgeschwindigkeit ($v_{r,i}$) bestimmt wird aus einer verbleibenden Frequenzlage nach Abzug einer jeweiligen Frequenzlagenverschiebung ($\Delta$fa(i)), wobei die jeweiligen Frequenzlagenverschiebungen ($\Delta$fa(i)) für die jeweiligen Auswertungskanäle (i) Entfernungsunterschieden des Radarziels zu den jeweiligen entsprechenden mittleren Antennenpositionen (($0,y_i$)) entsprechen.

6. Verfahren nach Anspruch 5, mit den Schritten:

- Schätzen eines globalen Aspektwinkels ($\theta$) des Radarziels anhand von Amplituden- und/oder Phasenbeziehungen zwischen Signalen jeweiliger Auswertungskanäle, die unterschiedlichen mittleren Antennenpositionen ($y_i$) der betreffenden sendenden und empfangenden Antennen (22, 10, 12) in der genannten Richtung ent-sprechen;
- Bestimmen jeweiliger Frequenzlagenverschiebungen ($\Delta$fa(i)) der Signale in den jeweiligen Auswertungs-kanälen (i), welche Frequenzlagenverschiebungen ($\Delta$fa(i)) Entfernungsunterschieden des Radarziels zu den jeweiligen entsprechenden mittleren Antennenpositionen (($0,y_i$)) entsprechen, in Abhängigkeit des geschätzten globalen Aspektwinkels ($\theta$),

wobei in dem Schritt des Bestimmens der jeweiligen individuellen Radialgeschwindigkeiten ($v_{r,i}$) des Radarziels für den jeweiligen Auswertungskanal (i) die jeweilige individuelle Radialgeschwindigkeit ($v_{r,i}$) bestimmt wird aus der verbleibenden Frequenzlage des Signals in dem Auswertungskanal (i) bei Berücksichtigung der jeweiligen be-stimmten Frequenzlagenverschiebung ($\Delta$fa(i)).

7. Verfahren nach Anspruch 1, bei dem in dem Schritt des Bestimmens der jeweiligen individuellen Aspektwinkel ($\theta_i$) des Radarziels die jeweiligen individuellen Aspektwinkel ($\theta_i$) des Radarziels bestimmt werden basierend auf einem geschätzten Aspektwinkel ($\theta$) des Radarziels und einer geschätzten Entfernung (d) des Radarziels, unter Berücksichtigung der betreffenden mittleren Antennenposition ($y_i$) des jeweiligen Auswertungskanals (i).

8. Verfahren nach einem der Ansprüche 1-4, 6 oder 7, mit dem Schritt:

- Schätzen eines globalen Aspektwinkels ($\theta$) des Radarziels anhand von Amplituden- und/oder Phasenbeziehungen zwischen Signalen jeweiliger Auswertungskanäle, die unterschiedlichen mittleren Antennenpositionen (($0,yi$)) der betreffenden sendenden und empfangenden Antennen (22, 10, 12) in der genannten Richtung entsprechen, wobei die Signale der jeweiligen Auswertungskanäle (i) an jeweiligen Frequenzlagen ausgewertet werden unter Berücksichtigung jeweiliger erster Frequenzlagenverschiebungen ($\Delta fa(i)$) der Signale in den jeweiligen Auswertungskanälen (i), welche erste Frequenzlagenverschiebungen ($\Delta fa(i)$) Entfernungsunterschiede des Radarziels zu den jeweiligen entsprechenden mittleren Antennenpositionen (($0,y_i$)) entsprechen, und/oder unter Berücksichtigung jeweiliger zweiter Frequenzlagenverschiebungen ($\Delta fb(i)$) der Signale in den jeweiligen Auswertungskanälen (i), welche zweiten Frequenzlagenverschiebungen ($\Delta fa(i)$) Unterschieden der individuellen Radialgeschwindigkeiten ($v_{r,i}$) des Radarziels für den jeweiligen Auswertungskanal (i) entsprechen.

9. Radarsensor für Kraftfahrzeuge, mit einer Antennenanordnung mit mehreren Antennen (10, 12), die in horizontaler Richtung in verschiedenen Positionen angeordnet sind, und mit einer Steuer- und Auswerteeinrichtung (30), die dazu ausgelegt ist, das Verfahren nach einem der Ansprüche 1 bis 8 auszuführen.

**Claims**

1. Method for estimating a velocity (($v_x,v_y$)) of a radar target using a radar sensor for motor vehicles on the basis of signals obtained in respective evaluation channels (i) in a single measurement using a single transmission signal modulation cycle, wherein the respective evaluation channels (i) correspond to different middle antenna positions ($y_i$) of relevant bi-statically transmitting and receiving antennas (22, 10, 12) of the radar sensor, the middle antenna positions ($y_i$) of the respective evaluation channels (i) being different in the horizontal direction, comprising the steps of:

- determining, for the different evaluation channels (i), a respective individual radial velocity ($v_{r,i}$) of the radar target, which radial velocity is assigned to the respective evaluation channel; and
- estimating a velocity (($v_x,v_y$)) of the radar target on the basis of the individual radial velocities ($v_{r,i}$) of the radar target that have been determined in a single measurement of the radial velocity in the respective evaluation channels (i), wherein the velocity (($v_x,v_y$)) includes information about a tangential velocity ($v_y$);
- determining, for the respective evaluation channels (i), a respective individual aspect angle ($\theta_i$) of the radar target, which aspect angle is assigned to the respective evaluation channel; wherein the step of estimating a velocity (($v_x,v_y$)) of the radar target involves the velocity (($v_x,v_y$)) of the radar target being estimated on the basis of the determined individual radial velocities ($v_{r,i}$) of the radar target and on the basis of the determined individual aspect angles ($\theta_i$) of the radar target.

2. Method according to Claim 1, wherein in the step of estimating a velocity (($v_x,v_y$)) of the radar target the velocity (($v_x,v_y$)) includes information about a velocity ($v_x$) in the forward direction relative to the radar sensor and a tangential velocity ($v_y$).

3. Method according to Claim 2, wherein the step of estimating a velocity (($v_x,v_y$)) of the radar target involves a Cartesian velocity (($v_x,v_y$)) of the radar target being estimated that includes the velocity ($v_x$) in the forward direction relative to the radar sensor and the tangential velocity ($v_y$).

4. Method according to one of the preceding claims, wherein the step of determining the respective individual radial velocities ($v_{r,i}$) of the radar target for the respective evaluation channel (i) involves the respective individual radial velocity ($v_{r,i}$) being determined on the basis of a respective frequency ($fa(i)$) of the signal in the evaluation channel (i).

5. Method according to one of the preceding claims, wherein the step of determining the respective individual radial velocities ($v_{r,i}$) of the radar target for the respective evaluation channel (i) involves the respective individual radial velocity ($v_{r,i}$) being determined from a remaining frequency after subtracting a respective frequency shift ($\Delta fa(i)$), wherein the respective frequency shifts ($\Delta fa(i)$) for the respective evaluation channels (i) correspond to differences in distance between the radar target and the respective corresponding middle antenna positions (($0,y_i$)).

6. Method according to Claim 5, comprising the steps of:

- estimating a global aspect angle ($\theta$) of the radar target on the basis of amplitude and/or phase relationships between signals of respective evaluation channels corresponding to different middle antenna positions ($y_i$) of the relevant transmitting and receiving antennas (22, 10, 12) in the said direction;

- determining respective frequency shifts ($\Delta fa(i)$) of the signals in the respective evaluation channels (i), which frequency shifts ($\Delta fa(i)$) correspond to differences in distance between the radar target and the respective corresponding middle antenna positions (($0,y_i$)), according to the estimated global aspect angle ($\theta$),

wherein the step of determining the respective individual radial velocities ($v_{r,i}$) of the radar target for the respective evaluation channel (i) involves the respective individual radial velocity ($v_{r,i}$) being determined from the remaining frequency of the signal in the evaluation channel (i), taking into account the respective determined frequency shift ($\Delta fa(i)$).

7. Method according to Claim 1, wherein the step of determining the respective individual aspect angles ($\theta_i$) of the radar target involves the respective individual aspect angles ($\theta_i$) of the radar target being determined on the basis of an estimated aspect angle ($\theta$) of the radar target and an estimated distance (d) of the radar target, taking into account the relevant middle antenna position ($y_i$) of the respective evaluation channel (i).

8. Method according to one of Claims 1-4, 6 or 7, comprising the step of:

- estimating a global aspect angle ($\theta$) of the radar target on the basis of amplitude and/or phase relationships between signals of respective evaluation channels corresponding to different middle antenna positions (($0,y_i$)) of the relevant transmitting and receiving antennas (22, 10, 12) in the said direction, wherein the signals of the respective evaluation channels (i) are evaluated at respective frequencies, taking into account respective first frequency shifts ($\Delta fa(i)$) of the signals in the respective evaluation channels (i), which first frequency shifts ($\Delta fa(i)$) correspond to differences in distance between the radar target and the respective corresponding middle antenna positions (($0,y_i$)), and/or taking into account respective second frequency shifts ($\Delta fb(i)$) of the signals in the respective evaluation channels (i), which second frequency shifts ($\Delta fa(i)$) correspond to differences in the individual radial velocities ($v_{r,i}$) of the radar target for the respective evaluation channel (i).

9. Radar sensor for motor vehicles, comprising an antenna arrangement having multiple antennas (10, 12) arranged in different positions in the horizontal direction, and comprising a control and evaluation device (30) designed to carry out the method according to one of Claims 1 to 8.

**Revendications**

1. Procédé destiné à estimer une vitesse (($v_x,v_y$)) d'une cible radar avec un capteur radar pour véhicules automobiles, à l'aide de signaux qui sont obtenus dans des canaux d'évaluation (i) respectifs lors d'une mesure unique avec un cycle de modulation de signal d'émission unique, les canaux d'évaluation (i) respectifs correspondant à différentes positions centrales ($y_i$) d'antennes émettrices et réceptrices bistatiques (22, 10, 12) du capteur radar, les positions centrales ($y_i$) des canaux d'évaluation (i) respectifs étant différentes dans la direction horizontale, comprenant les étapes suivantes :

- déterminer, pour les différents canaux d'évaluation (i), une vitesse radiale individuelle ($v_{r,i}$) respective de la cible radar associée au canal d'évaluation respectif ; et

- estimer une vitesse (($v_x,v_y$)) de la cible radar, sur la base des vitesses radiales individuelles ($v_{r,i}$) de la cible radar, déterminées lors d'une mesure unique de la vitesse radiale dans les canaux d'évaluation (i) respectifs, la vitesse (($v_x,v_y$)) comprenant des informations concernant une vitesse tangentielle ($v_y$) ;

- déterminer, pour les canaux d'évaluation (i) respectifs, un angle d'aspect individuel ($\theta_i$) respectif de la cible radar, associé au canal d'évaluation respectif ; la vitesse (($v_x,v_y$)) de la cible radar étant estimée, lors de l'étape d'estimation d'une vitesse (($v_x,v_y$)) de la cible radar, sur la base des vitesses radiales individuelles ($v_{r,i}$) déterminées de la cible radar et des angles d'aspect individuels ($\theta_i$) déterminés de la cible radar.

2. Procédé selon la revendication 1, dans lequel, lors de l'étape d'estimation d'une vitesse (($v_x,v_y$)) de la cible radar, la vitesse (($v_x,v_y$)) comprend des informations concernant une vitesse ($v_x$) vers l'avant par rapport au capteur radar et une vitesse tangentielle ($v_y$).

3. Procédé selon la revendication 2, dans lequel, lors de l'étape d'estimation d'une vitesse (($v_x,v_y$)) de la cible radar, on

9

estime une vitesse cartésienne $((v_x, v_y))$ de la cible radar qui comprend la vitesse $(v_x)$ vers l'avant par rapport au capteur radar et la vitesse tangentielle $(v_y)$.

4. Procédé selon l'une des revendications précédentes, dans lequel, lors de l'étape de détermination des vitesses radiales individuelles $(v_{r,i})$ respectives de la cible radar pour le canal d'évaluation (i) respectif, la vitesse radiale individuelle $(v_{r,i})$ respective est déterminée sur la base d'une position de fréquence (fa(i)) respective du signal dans le canal d'évaluation (i).

5. Procédé selon l'une des revendications précédentes, dans lequel, lors de l'étape de détermination des vitesses radiales individuelles $(v_{r,i})$ respectives de la cible radar pour le canal d'évaluation (i) respectif, la vitesse radiale individuelle $(v_{r,i})$ respective est déterminée à partir d'une position de fréquence restante après soustraction d'un décalage de position de fréquence $(\Delta fa(i))$ respectif, les décalages de position de fréquence $(\Delta fa(i))$ respectifs pour les canaux d'évaluation (i) respectifs correspondant à des différences de distance de la cible radar par rapport aux positions centrales d'antenne $((0,y_i))$ correspondantes respectives.

6. Procédé selon la revendication 5, comprenant les étapes consistant à :

   - estimer un angle d'aspect global $(\theta)$ de la cible radar à l'aide de relations d'amplitude et/ou de phase entre des signaux de canaux d'évaluation respectifs correspondant à différentes positions centrales d'antenne $(y_i)$ des antennes émettrices et réceptrices (22, 10, 12) concernées dans ladite direction ;
   - déterminer des décalages de position de fréquence $(\Delta fa(i))$ respectifs des signaux dans les canaux d'évaluation (i) respectifs, lesquels décalages de position de fréquence $(\Delta fa(i))$ correspondent à des différences de distance de la cible radar par rapport aux positions centrales d'antenne $((0,y_i))$ respectives correspondantes, en fonction de l'angle d'aspect global estimé $(\theta)$,

   la vitesse radiale individuelle $(v_{r,i})$ respective de la cible radar pour le canal d'évaluation (i) respectif étant déterminée, lors de l'étape de détermination des vitesses radiales individuelles $(v_{r,i})$ respectives, à partir de la position de fréquence restante du signal dans le canal d'évaluation (i) en tenant compte du décalage de position de fréquence $(\Delta fa(i))$ déterminé respectif.

7. Procédé selon la revendication 1, dans lequel, lors de l'étape de détermination des angles d'aspect individuels $(\theta_i)$ respectifs de la cible radar, les angles d'aspect individuels $(\theta_i)$ respectifs de la cible radar sont déterminés sur la base d'un angle d'aspect estimé $(\theta)$ de la cible radar et d'une distance estimée (d) de la cible radar, en tenant compte de la position centrale d'antenne $(y_i)$ concernée du canal d'évaluation (i) respectif.

8. Procédé selon l'une des revendications 1-4, 6 ou 7, comprenant l'étape consistant à :

   - estimer un angle d'aspect global $(\theta)$ de la cible radar à l'aide de relations d'amplitude et/ou de phase entre des signaux de canaux d'évaluation respectifs correspondant à des positions centrales $((0,y_i))$ différentes des antennes émettrices et réceptrices (22, 10, 12) concernées dans ladite direction, les signaux des canaux d'évaluation (i) respectifs étant évalués à des positions de fréquence respectives en tenant compte de premiers décalages de position de fréquence $(\Delta fa(i))$ respectifs des signaux dans les canaux d'évaluation (i) respectifs, lesquels premiers décalages de position de fréquence $(\Delta fa(i))$ correspondent à des différences de distance de la cible radar par rapport aux positions centrales correspondantes d'antenne $((0,y_i))$ respectives, et/ou en tenant compte de seconds décalages de position de fréquence $(\Delta fb(i))$ respectifs des signaux dans les canaux d'évaluation (i) respectifs, lesquels seconds décalages de position de fréquence $(\Delta fa(i))$ correspondent à des différences des vitesses radiales individuelles $(v_{r,i})$ de la cible radar pour le canal d'évaluation (i) respectif.

9. Capteur radar pour véhicules automobiles, comprenant un système d'antennes comportant plusieurs antennes (10, 12) qui sont agencées dans différentes positions dans la direction horizontale, et comprenant un dispositif de commande et d'évaluation (30) qui est conçu pour mettre en œuvre le procédé selon l'une des revendications 1 à 8.

Fig. 1

**Fig. 2**

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012024998 A1
- EP 2068173 A1
- DE 102013019804 A1
- DE 102013011239 A1
- WO 2010000252 A2